# EUROPÄISCHE PATENTSCHRIFT

(11) **EP 2 581 278 B1**
(45) Veröffentlichungstag und Bekanntmachung des Hinweises auf die Patenterteilung: **16.01.2019**
(21) Anmeldenummer: 12186999.4
(22) Anmeldetag: 02.10.2012
(51) Int. Cl.: B60S 1/34

(54) **Scheibenwischvorrichtung**
Windscreen wiper device
Dispositif d'essuie-glace

(30) Priorität: 10.10.2011 DE 102011084207
(43) Veröffentlichungstag der Anmeldung: 17.04.2013
(73) Patentinhaber: ROBERT BOSCH GMBH, 70442 Stuttgart (DE)
(72) Erfinder: Singler, Thomas, 77790 Steinach (DE); Huesges, Mario, 77830 Buehlertal (DE); Vathke, Andreas, 77815 Buehl (DE)

(56) Entgegenhaltungen:
- US-A1- 2004 049 875

## Beschreibung

Die Erfindung betrifft eine Scheibenwischvorrichtung mit einem Wischerantrieb, einer Antriebskonsole, einer ersten Wischerwelle und einer zweiten Wischerwelle, wobei an der Antriebskonsole der Wischerantrieb angeordnet ist und ein Wischerlager zur Lagerung der ersten Wischerwelle vorgesehen ist, wobei die zweite Wischerwelle aus dem Wischerantrieb herausragt und in dem Wischerantrieb mittels einer im Wischerantrieb angeordneten Lagerung gelagert ist. Die US 2004/0049875 A1 offenbart eine gattungsgemäße Scheibenwischvorrichtung.

### Stand der Technik

Bekannt sind Scheibenwischvorrichtungen mit einer ersten und einer zweiten Wischerwelle sowie mit einem Wischerantrieb, der an einer Antriebskonsole befestigt ist. Der Wischerantrieb treibt die zweite Wischerwelle an, die in dem Wischerantrieb gelagert ist. Die zweite Wischerwelle ragt dabei durch die Antriebskonsole hindurch und ist mittels eines Koppeltriebes mit der ersten Wischerwelle verbunden. Diese Ausgestaltung wird insbesondere dann gewählt, wenn das Wischfeld auf der Beifahrerseite nur unbefriedigend abgewischt bzw. wenn die beifahrerseitige Wischeranlage nicht optimal positioniert werden kann. Der Koppeltrieb kann als Viergelenk ausgebildet sein. Der Koppeltrieb ist dabei mit den Wischerwellen verbunden. Durch die Durchführung der zweiten Wischerwelle durch die Antriebskonsole besteht ein großer Abstand zwischen der Lagerung im Wischerantrieb und der Befestigung des Koppeltriebs an der zweiten Wischerwelle.

### Offenbarung der Erfindung

Es ist somit Aufgabe der Erfindung, eine Scheibenwischvorrichtung mit einer verbesserten Abstützung der Lagerkräfte bereitzustellen.

Diese Aufgabe wird mittels des Anspruchs 1 gelöst. Vorteilhafte Ausführungsformen sind in den abhängigen Ansprüchen angegeben.

Erfindungsgemäß wurde erkannt, dass eine verbesserte Scheibenwischvorrichtung mit einem Wischerantrieb, einer Antriebskonsole, einer ersten Wischerwelle und einer zweiten Wischerwelle dadurch bereitgestellt werden kann, dass an der Antriebskonsole der Wischerantrieb angeordnet ist und ein Wischerlager zur Lagerung der ersten Wischerwelle vorgesehen ist. Die zweite Wischerwelle ragt dabei aus dem Wischerantrieb heraus. Dabei ist die zweite Wischerwelle in dem Wischerantrieb mittels einer im Wischerantrieb angeordneten Lagerung gelagert. Ferner ist in der Antriebskonsole eine zusätzliche Lagerstelle zur Lagerung der zweiten Wischerwelle vorgesehen, die ausgelegt ist, radiale Kräfte von der zweiten Wischerwelle aufzunehmen und an der Antriebskonsole abzustützen. Diese Ausgestaltung hat den Vorteil, dass die Lagerkräfte in der Lagerung, die innerhalb des Wischerantriebs angeordnet ist, deutlich reduziert werden, so dass die Belastung der Lagerung deutlich reduziert wird. Ferner kann die Lagerstelle durch ihre Anordnung außerhalb des Wischerantriebs flexibel und bedarfsgerecht an die Konstruktion der Antriebskonsole bzw. des Koppeltriebs und deren applikationsspezifische Konstruktion und Anforderungen angepasst werden. Ferner werden die Toleranzketten innerhalb der Lagerung hierbei reduziert.

In einer weiteren Ausführungsform ist die erste Wischerwelle beifahrerseitig und die zweite Wischerwelle fahrerseitig angeordnet, wobei die beiden Wischerwellen mittels eines Koppeltriebs miteinander verbunden sind, wobei die Kräfte in Radialrichtung der zweiten Wischerwelle zum überwiegenden Teil durch die zusätzliche Lagerstelle in der Antriebskonsole abgeführt werden. Diese Ausgestaltung hat den Vorteil, dass die Lagerung der zweiten Wischerwelle innerhalb des Wischerantriebs kleiner ausgeführt werden kann, da die abzustützenden Kräfte in Radialrichtung zum überwiegenden Teil außerhalb des Wischerantriebs durch die zusätzliche Lagerstelle in der Antriebskonsole abgestützt werden. Daraus resultierend kann auch der Bauraum für den Wischerantrieb reduziert werden.

In einer weiteren Ausführungsform ist die die im Wischerantrieb angeordnete Lagerung ausgelegt ist, die zweite Wischerwelle kinematisch bestimmt zu lagern.

Auf diese Weise kann kann die axiale Position der zweiten Wischerwelle zuverlässig festgelegt werden.

In einer weiteren Ausführungsform der Erfindung weist die Antriebskonsole im Bereich der zweiten Wischerwelle eine Ausbuchtung auf, die einen Teil des Wischerantriebs überdeckt, wobei in der Ausbuchtung die zusätzliche Lagerstelle zur Lagerung der zweiten Wischerwelle angeordnet ist. Auf diese Weise kann die Antriebskonsole einstückig und materialeinheitlich ausgebildet sein und gleichzeitig der Bauraum für die Scheibenwischvorrichtung gering gehalten werden. Ferner wird hierdurch auch der Abstand zwischen einem Befestigungsabschnitt, an dem beispielsweise ein Wischerarm bzw. der Koppeltrieb angeordnet wird, und der zusätzlichen Lagerstelle gering gehalten, so dass hierdurch die in die zusätzliche Lagerstelle eingebrachten Kräfte reduziert sind.

In einer weiteren Ausführungsform der Erfindung weist die Ausbuchtung einen glockenförmigen Querschnitt auf, wobei die zusätzliche Lagerstelle in einer Öffnung der Ausbuchtung angeordnet ist. Auf diese Weise werden die durch die zusätzliche Lagerstelle in die Antriebskonsole eingebrachten Kräfte spannungstechnisch günstig abgestützt.

In einer weiteren Ausführungsform ist die zusätzliche Lagerstelle direkt angrenzend an einen Befestigungsabschnitt der zweiten Wischerwelle angeordnet. Auf diese Weise können die Abstützkräfte in der zusätzlichen Lagerstelle reduziert werden.

Besonders vorteilhaft ist es, wenn die zusätzliche Lagerstelle als Gleitlager oder als Wälzlager, insbesondere als Nadellager, ausgebildet ist.

Nachfolgend wird die Erfindung anhand der Figuren erläutert. Dabei zeigen:
Figur 1 eine Schnittansicht durch eine Scheibenwischvorrichtung, und
Figur 2 eine perspektivische Teilansicht der Scheibenwischvorrichtung.

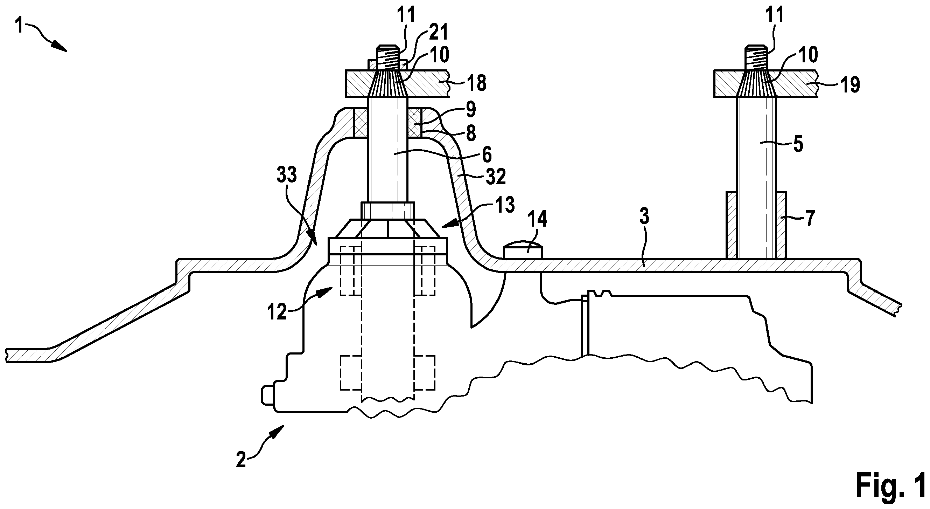

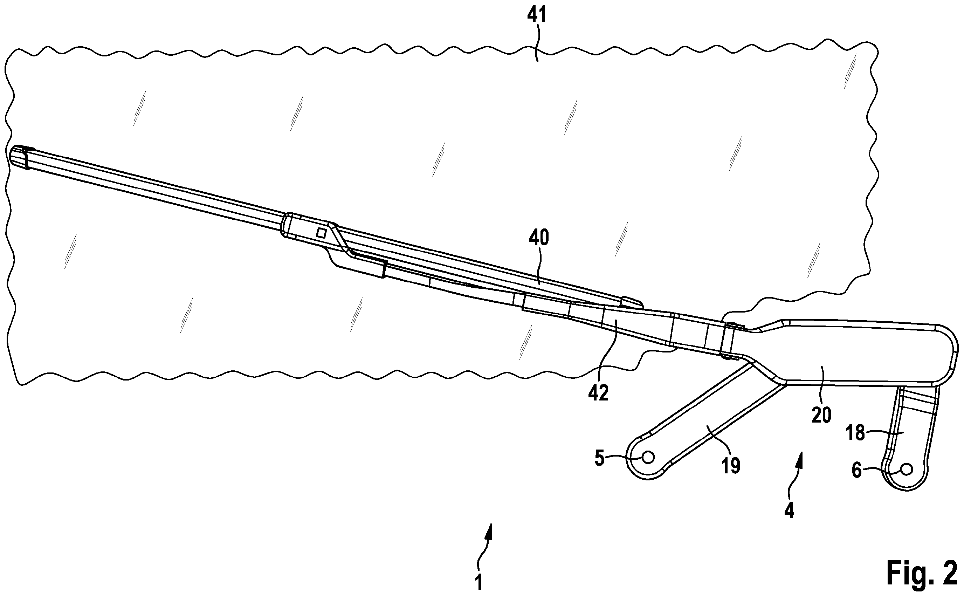

Figur 1 zeigt eine perspektivische Schnittansicht durch eine Scheibenwischvorrichtung 1 und Figur 2 eine perspektivische Teilansicht der Scheibenwischvorrichtung 1. Die Scheibenwischvorrichtung 1 umfasst einen Wischerantrieb 2, eine Antriebskonsole 3, eine erste Wischerwelle 5 und eine zweite Wischerwelle 6. Der Wischerantrieb 2 ist dabei mittels Befestigungselementen 14 unterseitig an der Antriebskonsole 3 befestigt. Dabei weist der Wischerantrieb 2 eine Lagerung 12 zur kinematisch bestimmten Lagerung der zweiten Wischerwelle 6 auf. Die zweite Wischerwelle 6 ragt dabei aus dem Gehäuse 33 des Wischerantriebs 2 heraus.

Die Antriebskonsole 3 umfasst eine zusätzliche Lagerstelle 9 zur Lagerung der zweiten Wischerwelle 6. Dabei ist die zweite Wischerwelle 6 durch eine Öffnung 8, in der die zusätzliche Lagerstelle 9 angeordnet ist, durch die Antriebskonsole 3 geführt. Ferner weist die Antriebskonsole 3 ein Wischerlager 7 zur Lagerung der ersten Wischerwelle 5 auf. Dabei kann die Antriebskonsole 3 so ausgebildet sein, dass das Wischerlager 7 in der Antriebskonsole 3 integriert ist. Das Wischerlager 7 bzw. die Lagerung 12 ist zur kinematisch bestimmten Lagerung der ersten Wischerwelle 5 bzw. der zweiten Wischerwelle 6 ausgelegt, so dass sowohl Radialkräfte als auch Axialkräfte von dem Wischerlager 7 aus der ersten Wischerwelle 5 bzw. von der Lagerung 12 aus der zweiten Wischerwelle 6 aufgenommen werden.

Zur Vergrößerung eines Wischfelds eines Wischblatts 40 der Scheibenwischvorrichtung 1 auf einer Windschutzscheibe 41 eines Kraftfahrzeugs im Bereich der Beifahrerseite bestehen üblicherweise Schwierigkeiten, die erste Wischerwelle 5 optimal zu positionieren. Um die nicht optimale Befestigungsposition eines Wischarms 42 der Scheibenwischvorrichtung 1 in einem Fahrzeug auszugleichen, ist ein Koppeltrieb 4 vorgesehen (vgl. Figur 2), der mit dem Wischerarm 42 verbunden ist. Hierfür umfasst der Koppeltrieb 4 eine erste Koppel 19, eine zweite Koppel 18 und eine Verbindungsstange 20, die an ihren Enden jeweils über eine gelenkigen Verbindung (nicht dargestellt) mit der ersten Koppel 19 bzw. der zweiten Koppel 18 verbunden ist. Ferner ist die Verbindungsstange 20 mit dem Wischarm 42 verbunden, wobei die Verbindungsstange 20 in der Ausführungsform geometrisch und in ihrer axialen Ausrichtung direkt in den Wischarm 42 übergeht.

An dem jeweiligen oberen Ende der Wischerwellen 5, 6 ist ein kegelförmiger Befestigungsbereich 10 zur Befestigung der Koppeln 18, 19 vorgesehen. Gesichert bzw. befestigt werden die Koppeln an der ersten Wischerwelle 5 bzw. der zweiten Wischerwelle 6 durch einen oberhalb des Befestigungsabschnitts 10 angeordneten Gewindebereich 11 und einer darin eingreifenden Mutter 31. Durch den Befestigungsbereich 10 der Wischerwellen 5, 6 werden die Antriebs- und Abstützkräfte zwischen der jeweiligen Koppel 18, 19 und der jeweiligen Wischerwelle 5 übertragen.

In der Ausführungsform ist der Koppeltrieb 4 als Viergelenk ausgeführt, so dass das Wischblatt 40 sowohl in einer Schwenkbewegung über die Windschutzscheibe 41 als auch in einer Hubbewegung (in Längsrichtung des Wischblatts 40) über die Windschutzscheibe 41 geführt wird. Alternativ zu der gezeigten Ausführungsform des Koppeltriebs 4 als Viergelenk kann der Koppeltrieb 4 auch als Kreuzgelenk ausgebildet sein.

Ferner wird auch darauf hingewiesen, dass in der Ausführungsform die zweite Wischerwelle 6 gleichzeitig die Abtriebswelle des Wischerantriebs 2 ist, so dass der Antrieb des Koppeltriebs 4 direkt, ohne einen weiteren Kurbeltrieb oder andere Übersetzungsmittel, erfolgt. Durch die direkte Kopplung des Koppeltriebs 4 mit der Abtriebswelle des Wischerantriebs 2, bzw. der zweiten Wischerwelle 6, kann eine besonders einfach aufgebaute Scheibenwischvorrichtung 1 bereitgestellt werden.

Um eine optimale Abstützung zu erreichen, so dass der überwiegende Teil aus den Radialkräften in die zusätzliche Lagerstelle abgeführt wird, ist in der Ausführungsform der Befestigungsabschnitt 10 der zweiten Wischerwelle 6 direkt angrenzend an die zusätzliche Lagerstelle 9 angeordnet. Durch die Abstützung der Radialkräfte durch die zusätzliche Lagerstelle 9 wird die Belastung der Lagerung 12 des Wischerantriebs 2 reduziert, so dass sowohl die Belastung des Wischerantriebs 2 reduziert wird, als auch die Lagerung 12 kleiner und somit bauraumoptimierter ausgebildet werden kann. Daraus resultierend kann auch der Wischerantrieb 2 kleiner ausgebildet werden.

Eine optimale Abstützung der Lagerkräfte wird ferner durch die Ausgestaltung der Antriebskonsole 3 mit einer Ausbuchtung 32, die einen glockenförmigen Querschnitt aufweist, erreicht. Dabei ist im oberen Bereichs der Ausbuchtung 32 die Öffnung 8 zur Anordnung der zusätzlichen Lagerstelle 9 vorgesehen. Die Ausbuchtung überdeckt dabei einen Teil des Wischerantriebs 12, so dass ein oberer Abschnitt 13 des Wischerantriebs 2 in die Ausbuchtung 32 der Antriebskonsole 3 hineinragt. Dadurch kann eine bauraumoptimierte Ausgestaltung der Scheibenwischvorrichtung 1 bereitgestellt werden.

Ferner kann die zweite Wischerwelle 6 nicht nur mit der ersten Wischerwelle 5 über den Koppeltrieb 4, sondern auch noch mit einem weiteren Koppeltrieb mit weiteren Wischerwellen gekoppelt sein. Diese Ausgestaltung bietet sich insbesondere für Fahrzeuge mit großen Windschutzscheiben, wie z. B. Lastkraftwägen oder Bussen, an.

In der Ausführungsform ist die zusätzliche Lagerstelle 9 als Gleitlager oder Wälzlager, insbesondere als Nadellager ausgebildet. Die zusätzliche Lagerstelle 9 nimmt dabei ausschließlich Querkräfte/Radialkräfte auf. Alternativ kann die zusätzliche Lagerstelle 9 auch ausgelegt sein, die axiale Position der zweiten Wischerwelle 6 festzulegen und/oder Axialkräfte aus der zweiten Wischerwelle 6 aufzunehmen. Ferner ist ein Verspannen der zweiten Wischerwelle 6 in der Lagerung 12 durch die zusätzliche Lagerstelle 9 denkbar, so dass auf diese Weise ein mögliches Lagerspiel der Lagerung 12 der zweiten Wischerwelle 6 des Wischerantriebs 2 reduziert wird.

Die Ausführungsform bietet ferner den Vorteil, durch eine flexible Gestaltung der Antriebskonsole 3 mit der zusätzlichen Lagerstelle 9 ein Baukastenkonzept für eine Scheibenwischvorrichtung 1 bereitzustellen. Dabei wird die fahrzeugspezifischen Erfordernisse durch eine entsprechend an das Fahrzeug angepasste Antriebskonsole 3 erfüllt, die jedoch trotz unterschiedlicher Ausführungsformen von einem baugleichen Wischerantrieb 2 angetrieben wird. Zur Abstützung der Kräfte aus dem Koppeltrieb 4 wird hierbei ausschließlich die zusätzliche Lagerstelle 9 adaptiert, so dass auf eine Anpassung der Lagerung 12 des Wischerantriebs 2 verzichtet werden kann.

Ferner wird darauf hingewiesen, dass in der Ausführungsform die Scheibenwischvorrichtung 1 so im Fahrzeug angeordnet ist, dass die erste Wischerwelle 5 beifahrerseitig und die zweite Wischerwelle 6 fahrerseitig angeordnet ist. Selbstverständlich kann die Anordnung auch anders gewählt werden, so dass die zweite Wischerwelle 6, die aus dem Scheibenwischantrieb 2 herausragt, beifahrerseitig oder auf einer Mittelachse des Fahrzeugs angeordnet ist, und die erste Wischerwelle 5 fahrerseitig angeordnet ist.

Auch ist denkbar, dass für weitere in den Figuren nicht dargestellte Wischerwellen in der Antriebskonsole 3 weitere zusätzliche Lagerstellen 9 vorgesehen sind, um die Antriebs- und Abstützkräfte des Wischerantriebs 2 bzw. aus dem Wischarm 42 zusätzlich zu einer bereits für diese Wischerwellen vorgesehenen kinematisch bestimmten Lagerung 12 abzustützen.

## Patentansprüche

1. Scheibenwischvorrichtung (1) mit einem Wischerantrieb (2), einer Antriebskonsole (3), einer ersten Wischerwelle (5) und einer zweiten Wischerwelle (6), wobei an der Antriebskonsole (3) der Wischerantrieb (2) angeordnet ist und ein Wischerlager (7) zur Lagerung der ersten Wischerwelle (5) vorgesehen ist, **dadurch gekennzeichnet, dass** die zweite Wischerwelle (6) aus dem Wischerantrieb (2) herausragt und in dem Wischerantrieb (2) mittels einer im Wischerantrieb (2) angeordneten Lagerung (12) gelagert ist, wobei die Antriebskonsole (3) eine zusätzliche Lagerstelle (9) zur Lagerung der zweiten Wischerwelle (6) aufweist, die ausgelegt ist, wenigstens Kräfte in Radialrichtung von der zweiten Wischerwelle (6) aufzunehmen und an der Antriebskonsole (3) abzustützen.

2. Scheibenwischvorrichtung (1) nach Anspruch 1, **dadurch gekennzeichnet, dass** die erste Wischerwelle (5) beifahrerseitig und die zweite Wischerwelle (6) fahrerseitig angeordnet sind, wobei die beiden Wischerwellen (5, 6) mittels eines Koppeltriebs (4) miteinander verbunden sind, wobei die Kräfte in Radialrichtung der zweiten Wischerwelle (6) zum überwiegenden Teil durch die zusätzliche Lagerstelle (9) der Antriebskonsole (3) abgestützt sind.

3. Scheibenwischvorrichtung (1) nach Anspruch 1 oder 2, **dadurch gekennzeichnet, dass** die im Wischerantrieb (2) angeordnete Lagerung (12) ausgelegt ist, die zweite Wischerwelle (6) kinematisch bestimmt zu lagern.

4. Scheibenwischvorrichtung (1) nach einem der Ansprüche 1 bis 3, **dadurch gekennzeichnet, dass** die Antriebskonsole (3) im Bereich der zweiten Wischerwelle (6) eine Ausbuchtung (32) aufweist, die einen Bereich (13) des Wischerantriebs (2) überdeckt, wobei in der Ausbuchtung (32) die zusätzliche Lagerstelle (9) angeordnet ist.

5. Scheibenwischvorrichtung (1) nach Anspruch 4, **dadurch gekennzeichnet, dass** die Ausbuchtung (32) einen glockenförmigen Querschnitt aufweist, wobei die zusätzliche Lagerstelle (9) in einer Öffnung (8) der Ausbuchtung (32) angeordnet ist.

6. Scheibenwischvorrichtung (1) nach einem der Ansprüche 1 bis 5, **dadurch gekennzeichnet, dass** die zusätzliche Lagerstelle (9) direkt an einem Befestigungsabschnitt (10) der zweiten Wischerwelle (6) zur Befestigung eines Wischerarms (30) angrenzend angeordnet ist.

7. Scheibenwischvorrichtung (1) nach Anspruch 2, **dadurch gekennzeichnet, dass** die zweite Wischerwelle (6) als Abtriebswelle des Wischerantriebs (2) ausgebildet ist und direkt mit dem Koppeltrieb (4) verbunden ist.

8. Scheibenwischvorrichtung (1) nach Anspruch 2 oder 7, **dadurch gekennzeichnet, dass** der Koppeltrieb (4) als Viergelenk oder als Kreuzgelenk ausgebildet ist, wobei der Koppeltrieb (4) eine Verbindungsstange (20) umfasst, die mit einem Wischarm (42) verbunden ist.

9. Scheibenwischvorrichtung (1) nach einem der Ansprüche 1 bis 8, **dadurch gekennzeichnet, dass** die zusätzliche Lagerstelle (9) als Gleitlager oder Wälzlager, insbesondere als Nadellager ausgebildet ist.

## Claims

1. Windscreen wiper device (1) with a wiper drive (2), a drive bracket (3), a first wiper shaft (5) and a second wiper shaft (6), wherein the wiper drive (2) is arranged on the drive bracket (3), and a wiper bearing (7) is provided for the mounting of the first wiper shaft (5), **characterized in that** the second wiper shaft (6) projects out of the wiper drive (2) and is mounted in the wiper drive (2) by means of a mounting (12) arranged in the wiper drive (2), wherein the drive bracket (3) has an additional bearing point (9) for the mounting of the second wiper shaft (6), said additional bearing point being configured to absorb at least forces in the radial direction from the second wiper shaft (6) and to support said forces on the drive bracket (3).

2. Windscreen wiper device (1) according to Claim 1, **characterized in that** the first wiper shaft (5) is arranged on the front-passenger's side and the second wiper shaft (6) is arranged on the driver's side, wherein the two wiper shafts (5, 6) are connected to each other by means of a coupling drive (4), wherein the forces in the radial direction of the second wiper shaft (6) are predominantly supported by the additional bearing point (9) of the drive bracket (3).

3. Windscreen wiper device (1) according to Claim 1 or 2, **characterized in that** the mounting (12) arranged in the wiper drive (2) is configured to mount the second wiper shaft (6) in a kinematically determined manner.

4. Windscreen wiper device (1) according to one of Claims 1 to 3, **characterized in that** the drive console (3) in the region of the second wiper shaft (6) has a protrusion (32) which covers a region (13) of the wiper drive (2), wherein the additional bearing point (9) is arranged in the protrusion (32) .

5. Windscreen wiper device (1) according to Claim 4, **characterized in that** the protrusion (32) has a bell-shaped cross section, wherein the additional bearing point (9) is arranged in an opening (8) of the protrusion (32).

6. Windscreen wiper device (1) according to one of Claims 1 to 5, **characterized in that** the additional bearing point (9) is arranged directly adjacent to a fastening portion (10) of the second wiper shaft (6) for the fastening of a wiper arm (30).

7. Windscreen wiper device (1) according to Claim 2, **characterized in that** the second wiper shaft (6) is in the form of an output shaft of the wiper drive (2) and is directly connected to the coupling drive (4) .

8. Windscreen wiper device (1) according to Claim 2 or 7, **characterized in that** the coupling drive (4) is in the form of a four-bar linkage or in the form of a universal joint, wherein the coupling drive (4) comprises a connecting rod (20) which is connected to a wiper arm (42).

9. Windscreen wiper device (1) according to one of Claims 1 to 8, **characterized in that** the additional bearing point (9) is in the form of a plain bearing or rolling bearing, in particular in the form of a needle bearing.

## Revendications

1. Dispositif d'essuie-glace (1) avec un entraînement de balai (2), une console d'entraînement (3), un premier arbre de balai (5) et un second arbre de balai (6), dans lequel l'entraînement de balai (2) est disposé sur la console d'entraînement (3) et il est prévu un palier de balai (7) pour le support du premier arbre de balai (5), **caractérisé en ce que** le second arbre de balai (6) sort de l'entraînement de balai (2) et est supporté dans l'entraînement de balai (2) au moyen d'un support (12) disposé dans l'entraînement de balai (2), dans lequel la console d'entraînement (3) présente un point d'appui supplémentaire (9) pour supporter le second arbre de balai (6), qui est conçu pour reprendre au moins des forces en direction radiale provenant du second arbre de balai (6) et pour prendre appui sur la console d'entraînement (3).

2. Dispositif d'essuie-glace (1) selon la revendication 1, **caractérisé en ce que** le premier arbre de balai (5) est disposé côté passager et le second arbre de balai (6) est disposé côté conducteur, dans lequel les deux arbres de balai (5, 6) sont reliés l'un à l'autre par un mécanisme de couplage (4), dans lequel les forces en direction radiale du second arbre de balai (6) sont supportées en majeure partie par le point d'appui supplémentaire (9) de la console d'entraînement (3).

3. Dispositif d'essuie-glace (1) selon la revendication 1 ou 2, **caractérisé en ce que** le support (12) disposé dans l'entraînement de balai (2) est conçu pour supporter précisément de façon cinématique le second arbre de balai (6).

4. Dispositif d'essuie-glace (1) selon l'une quelconque des revendications 1 à 3, **caractérisé en ce que** la console d'entraînement (3) présente dans la région du second arbre de balai (6) un renflement (32), qui recouvre une région (13) de l'entraînement de balai (2), dans lequel le point d'appui supplémentaire (9) est disposé dans le renflement (32).

5. Dispositif d'essuie-glace (1) selon la revendication 4, **caractérisé en ce que** le renflement (32) présente une section transversale en forme de cloche, dans lequel le point d'appui supplémentaire (9) est disposé dans une ouverture (8) du renflement (32).

6. Dispositif d'essuie-glace (1) selon l'une quelconque des revendications 1 à 5, **caractérisé en ce que** le point d'appui supplémentaire (9) est disposé directement à proximité d'une partie de fixation (10) du second arbre de balai (6) destinée à la fixation d'un bras d'essuie-glace (30).

7. Dispositif d'essuie-glace (1) selon la revendication 2, **caractérisé en ce que** le second arbre de balai (6) est formé par l'arbre de sortie de l'entraînement de balai (2) et est relié directement au mécanisme de couplage (4).

8. Dispositif d'essuie-glace (1) selon la revendication 2 ou 7, **caractérisé en ce que** le mécanisme de couplage (4) est formé par un quadrilatère articulé ou un joint de cardan, dans lequel le mécanisme de couplage (4) comprend une barre de liaison (20), qui est relié à un bras d'essuie-glace (42).

9. Dispositif d'essuie-glace (1) selon l'une quelconque des revendications 1 à 8, **caractérisé en ce que** le point d'appui supplémentaire (9) est formé par un palier lisse ou un palier à roulement, en particulier par un roulement à aiguilles.
